(19) Europäisches Patentamt
European Patent Office
Office européen des brevets

(11) **EP 4 654 274 A1**

(12) **EUROPEAN PATENT APPLICATION**

(43) Date of publication:
**26.11.2025 Bulletin 2025/48**

(21) Application number: **25177294.3**

(22) Date of filing: **19.05.2025**

(51) International Patent Classification (IPC):
*H01M 4/13* (2010.01)      *H01M 4/36* (2006.01)
*H01M 4/48* (2010.01)      *H01M 4/587* (2010.01)
*H01M 10/0525* (2010.01)      *H01M 4/139* (2010.01)
*H01M 4/02* (2006.01)

(52) Cooperative Patent Classification (CPC):
**H01M 4/587; H01M 4/13; H01M 4/364;
H01M 4/483; H01M 10/0525;** H01M 4/139;
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.05.2024 KR 20240064477**

(71) Applicant: **SK On Co., Ltd.
Seoul 03161 (KR)**

(72) Inventors:
• **KIM, Seon Ah
34124 Daejeon (KR)**
• **PARK, Yang Kyu
34124 Daejeon (KR)**
• **CHUNG, Ju Ho
34124 Daejeon (KR)**

(74) Representative: **Stolmár & Partner
Patentanwälte PartG mbB
Blumenstraße 17
80331 München (DE)**

(54) **ANODE ACTIVE MATERIAL FOR LITHIUM SECONDARY BATTERY, ANODE FOR LITHIUM SECONDARY BATTERY AND LITHIUM SECONDARY BATTERY**

(57)    An anode active material for a lithium secondary battery according to embodiments of the present disclosure includes a first anode active material which includes a carbon-based active material; and a second anode active material which includes a silicon-based active material with a carbon content of 1% by weight or less, wherein a content of the second anode active material is 0.1% by weight to 9% by weight based on the total weight of the anode active material, and a peak intensity ratio of a Raman spectrum of the second anode active material defined by a predetermined equation is 0.5 to 2.3. Accordingly, the resistance and expansion rate of the anode are reduced, and the output characteristics of the lithium secondary battery are improved.

FIG. 1

EP 4 654 274 A1

**Description**

BACKGROUND

1. Field

The embodiments of the present disclosure generally relate to an anode active material for a lithium secondary battery, an anode for a lithium secondary battery, and a lithium secondary battery.

2. Description of the Related Art

A secondary battery is a battery which can be repeatedly charged and discharged. With the rapid progress of information, communication, and display industries, the secondary battery has been widely applied to various portable electronic telecommunication devices such as a camcorder, a mobile phone, and a laptop computer, as a power source thereof. Recently, a battery pack including the secondary battery has also been developed and applied to an eco-friendly automobile such as a hybrid vehicle, an electric vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and its light weight, such that development thereof is progressing in this regard.

The lithium secondary battery may include for example, an electrode assembly including a cathode, an anode and a separation membrane interposed between the cathode and the anode; and an electrolyte in which the electrode assembly is impregnated. The lithium secondary battery may further include a pouch-shaped outer case in which the electrode assembly and the electrolyte are housed.

Recently, as subjects, to which the lithium secondary battery is applied, are expanded, development for a lithium secondary battery having a higher capacity and output is progressing. For example, high-capacity silicon and carbon may be prepared and used for an anode active material, but silicon undergoes volume expansion with repeated charging and discharging, which may lead to a deterioration in capacity and lifespan of the battery.

SUMMARY

An embodiment of the present disclosure provides an anode active material for a lithium secondary battery having improved mechanical stability and output characteristics.

Another embodiment of the present disclosure provides an anode for a lithium secondary battery which has improved mechanical stability and output characteristics.

In addition, another embodiment of the present disclosure provides a lithium secondary battery which has improved mechanical stability and output characteristics.

According to an embodiment of the present disclosure, there is provided an anode active material for a lithium secondary battery including a first anode active material which includes a carbon-based active material; and a second anode active material which includes a silicon-based active material with a carbon content of 1% by weight or less, wherein a content of the second anode active material is 0.1% by weight to 9% by weight based on a total weight of the anode active material, and a peak intensity ratio of a Raman spectrum of the second anode active material defined by Equation 1 below is 0.5 to 2.3:

[Equation 1]

$$\text{Peak intensity ratio of Raman spectrum} = I(520) / I(470)$$

In Equation 1, I(520) may be a peak intensity of the second anode active material at a Raman shift of 520 cm$^{-1}$ in the Raman spectrum, and I(470) may be a peak intensity of the second anode active material at a Raman shift of 470 cm$^{-1}$ in the Raman spectrum.

In some embodiments, the silicon-based active material may include silicon oxide ($SiO_x$, $0<x<2$) particles.

In some embodiments, the silicon oxide particles may have no carbon coating on their surface.

In some embodiments, the silicon-based active material may have a carbon content of 0.5% by weight or less.

In some embodiments, the silicon-based active material may have a carbon content of 0% by weight.

In some embodiments, the peak intensity ratio of the Raman spectrum of the second anode active material may be 0.6 to 2.

In some embodiments, the content of the second anode active material may be 0.5% by weight to 8% by weight based on the total weight of the anode active material.

In some embodiments, the content of the first anode active material may be 90% by weight to 98% by weight based on the total weight of the anode active material.

In some embodiments, the carbon-based active material may include at least one selected from the group consisting of artificial graphite and natural graphite.

According to an embodiment of the present disclosure, there is provided an anode active material for a lithium secondary battery including; a first anode active material which comprises artificial or natural graphite; and a second anode active material which comprises a silicon-based active material with no carbon content, wherein a content of the second anode active material is 0.1% by weight to 9% by weight based on a total weight of the anode active material.

According to another embodiment of the present disclosure, there is provided an anode for a lithium secondary battery including an anode current collector; and an anode active material layer which is formed on at least one surface of the anode current collector and comprises the anode active material for a lithium secondary battery according to the above-described embodiments.

In some embodiments, a pore volume of the anode active material layer may be 0.20 mL/g to 0.25 mL/g.

In some embodiments, the pore volume of the anode active material layer may be 0.22 mL/g to 0.24 mL/g.

In some embodiments, an expansion rate defined by Equation 2 below may be 1% to 10.5%:

$$[\text{Equation 2}]$$

$$\text{Expansion rate } (\%) = (T_B - T_A) / (T_A) \times 100$$

In Equation 2, $T_A$ may be a thickness of the anode when a state of charge of the lithium secondary battery including the anode may be 0%, and $T_B$ may be a thickness of the anode when the state of charge of the lithium secondary battery including the anode may be 100%.

In some embodiments, the expansion rate may be 2% to 10%.

In addition, according to another embodiment of the present disclosure, there is provided a lithium secondary battery including the anode for a lithium secondary battery according to the above-described embodiments; and a cathode disposed to face the anode.

The anode active material for a lithium secondary battery according to embodiments may include a silicon-based active material and a carbon-based active material in a predetermined composition, with a controlled ratio of crystalline silicon to amorphous silicon.

Accordingly, the volume expansion of silicon may be suppressed, thereby preventing cracks in the anode active material during repeated charging and discharging, and improving mechanical stability and output characteristics of the lithium secondary battery.

The anode active material may be widely applied to green technology fields such as an electric vehicle, and a battery charging station, as well as other solar power generation and wind power generation using the batteries. In addition, the lithium secondary battery may be used in an eco-friendly electric vehicle, and a hybrid vehicle, etc., which are intended to prevent climate change by suppressing air pollution and greenhouse gas emissions.

BRIEF DESCRIPTION OF THE DRAWINGS

The above and other objects, features and other advantages of the embodiments of the present disclosure will be more clearly understood from the following detailed description taken in conjunction with the accompanying drawings, in which:

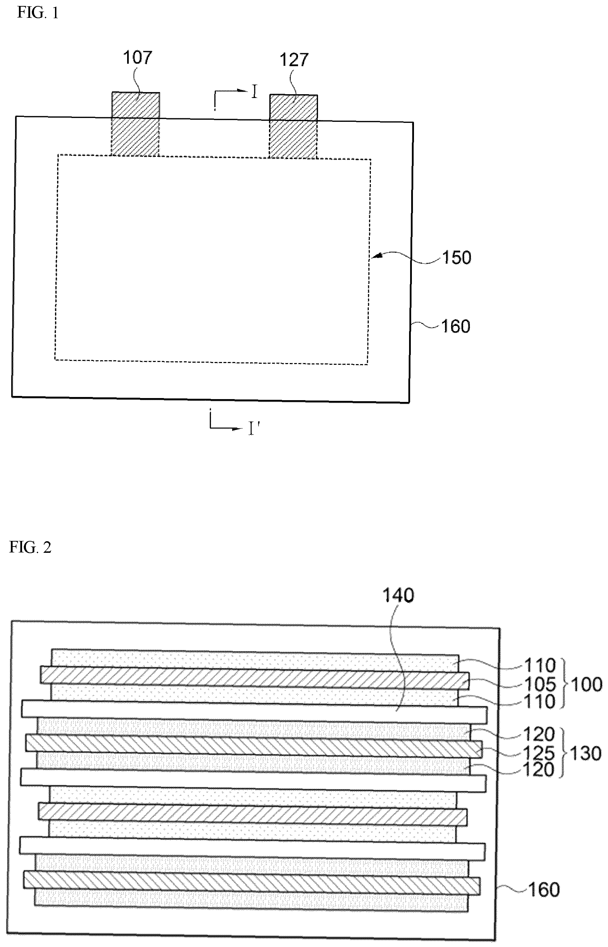

FIGS. 1 and 2 are a schematic plan view and a cross-sectional view of a rechargeable lithium battery according to embodiments of the present disclosure, respectively.

DETAILED DESCRIPTION

Embodiments of the present disclosure provide an anode active material which includes a silicon-based active material and a carbon-based active material in a predetermined composition, with a controlled ratio of crystalline silicon to amorphous silicon. In addition, an anode including the anode active material, and a lithium secondary battery including the anode are provided.

As used herein, the terms "first" and "second" do not limit the number or order of subjects modified by the "first" and the "second," but are used to distinguish the modified subjects which are different from each other.

As used herein, the "carbon-based active material" may refer to a material that includes carbon but does not include silicon.

As used herein, the "silicon-based active material" may refer to a material that includes silicon.

Hereinafter, the embodiments of the present disclosure will be described in detail. However, these embodiments are merely illustrative, and the present disclosure is not limited to the specific embodiments described as illustrated.

The anode active material for a lithium secondary battery according to embodiments (hereinafter, may be abbreviated as an "anode active material") may include a first anode active material including a carbon-based active material, and a second anode active material including a silicon-based active material with a carbon content of 1 wt% or less.

In some embodiments, the anode active material may be substantially composed of the first anode active material and the second anode active material.

In some embodiments, the carbon-based active material may include at least one selected from the group consisting of artificial graphite and natural graphite. In some embodiments, the first anode active material which comprises artificial graphite or natural graphite. In some embodiments, the first anode active material which comprises artificial graphite and natural graphite. For example, the mechanical stability of the lithium secondary battery may be improved through the artificial graphite, and the capacity and output of the lithium secondary battery may be improved through the natural graphite.

In some embodiments, the carbon-based active material may include artificial graphite. For example, the carbon-based active material may be composed of artificial graphite, thereby improving the output characteristics and lifespan characteristics of the lithium secondary battery.

In some embodiments the first anode active material may be composed of a carbon-based active material. In another embodiment, the first anode active material may include a carbon-based active material and may not include carbon-silicon (Si/C) composite particles.

In some embodiments, the second anode active material may include a silicon-based active material.

For example, when the silicon-based active material has a carbon content greater than 1 wt%, crystalline silicon may grow during a heat treatment process for preparing the silicon-based active material, thereby leading to excessive volume expansion of the electrode during repeated charging and discharging. Accordingly, cracks may be generated in the anode active material, and intercalation and deintercalation of lithium ions may be hindered.

In some embodiments, the silicon-based active material may have a carbon content of 0.5% by weight ("wt%") or less, for example, a carbon content of 0.1 wt% or less, a carbon content of 0.01 wt% or less, or a carbon content of 0 wt%. In some embodiments, the second anode active material may include a silicon-based active material.with no carbon content.

Within the above range of the carbon content, the resistance and expansion rate of the anode may be reduced, and the mechanical stability and output of the lithium secondary battery may be improved.

For example, the carbon content in the silicon-based active material may be measured using a thermogravimetric analyzer (TGA).

In some embodiments, the silicon-based active material may include silicon oxide ($SiO_x$, $0<x<2$) particles.

In another embodiment, the second anode active material may be composed of silicon oxide ($SiO_x$, $0<x<2$) particles.

For example, the silicon oxide ($SiO_x$, $0<x<2$) particles may not include carbon, but may include carbon as an impurity. For example, a trace amount of carbon contained in a dioxide or monoxide of metal such as iron, chromium, nickel, zinc, or copper may be included as an impurity. Accordingly, the silicon-based active material may have a carbon content in the above-described range.

In some embodiments, the silicon oxide particles may not have a carbon coating on their surface.

For example, when the silicon oxide particles are mixed with a carbon source gas and calcined by chemical vapor deposition (CVD) to form a carbon coating on the surface of the particles, the ratio of crystalline silicon may increase due to heating during the calcination.

Accordingly, the second anode active material may have a lattice structure in which lithium ions are difficult to intercalate and deintercalate, and volume expansion may not be suppressed during repeated charging and discharging, thereby leading to the formation of cracks in the anode active material.

According to embodiments, a peak intensity ratio of Raman spectrum of the second anode active material defined by Equation 1 below, may be 0.5 to 2.3.

[Equation 1]

$$\text{Peak intensity ratio of Raman spectrum} = I(520) / I(470)$$

In Equation 1, I(520) may be a peak intensity of the second anode active material at a Raman shift of 520 $cm^{-1}$ in the Raman spectrum, and I(470) may be a peak intensity of the second anode active material at a Raman shift of 470 $cm^{-1}$

in the Raman spectrum.

For example, in Equation 1, I(520) may represent a specific gravity of silicon having a crystalline structure (Crystal-Si), and in Equation 1, I(470) may represent a specific gravity of silicon having an amorphous structure (Amorphous-Si).

For example, when the peak intensity ratio of the Raman spectrum of the second anode active material is greater than 2.3, the second anode active material may have the lattice structure in which lithium ions are difficult to intercalate and deintercalate, and volume expansion during repeated charging and discharging may not be suppressed. Accordingly, the mechanical stability and output characteristics of the lithium secondary battery may deteriorate.

For example, when the peak intensity ratio of the Raman spectrum of the second anode active material is less than 0.5, the specific gravity of the amorphous silicon may be too high. Accordingly, an initial irreversible capacity may increase, thereby leading to a decrease in cell capacity and efficiency, as well as an increase in electrode resistance.

In some embodiments, the peak intensity ratio of the Raman spectrum of the second anode active material may be 0.6 to 2, for example, 0.65 to 1.9, 0.7 to 1.8, or 0.8 to 1.7. Within the above range, crack formation of the anode active material may be suppressed and the resistance of the anode may be reduced during repeated charging and discharging.

The Raman spectroscopy may be performed using the type of Raman spectrometer known in the art. For example, a laser wavelength of the Raman spectrometer may be, for example, about 532 nm to about 785 nm, a laser power may be about 5 mW to about 90 mW, a laser exposure time may be about 3 seconds to about 20 seconds, and the number of scans may be 1 to 10.

The characteristics (e.g., Raman characteristics) of the second anode active material according to the embodiments of the present disclosure do not necessarily depend on the carbon content and the presence or absence of the above-described carbon coating. For example, the peak intensity ratio value of the above-described Raman spectrum may also vary depending on other factors including the type of silicon oxide, individual physical properties such as particle diameter, heat treatment temperature, etc.

According to embodiments, a content of the second anode active material may be 0.1 wt% to 9 wt% based on a total weight of the anode active material.

For example, when the content of the second anode active material is less than 0.1 wt% based on the total weight of the anode active material, the resistance of the lithium secondary battery may increase and the output characteristics may deteriorate.

For example, when the content of the second anode active material is greater than 9 wt% based on the total weight of the anode active material, the volume of the electrode may expand excessively during repeated charging and discharging. Accordingly, the surface structure of the anode active material may collapse, and a side reaction between an electrode and an electrolyte may increase, thereby deteriorating the lifespan characteristics of the battery.

In some embodiments, the content of the second anode active material may be 0.5 wt% to 8 wt% based on the total weight of the anode active material, for example, 1 wt% to 7 wt%, 2 wt% to 6.5 wt%, or 3 wt% to 6 wt%. Within the above range, crack formation of the anode active material may be suppressed and the resistance of the anode may be reduced.

In some embodiments, a content of the first anode active material may be 90 wt% to 98 wt% based on the total weight of the anode active material, for example, 91 wt% to 97 wt%, 92 wt% to 96 wt%, or 93 wt% to 95.5 wt%. Within the above range, the capacity characteristics and lifespan characteristics of the lithium secondary battery may be improved.

FIGS. 1 and 2 are a schematic plan view and a cross-sectional view illustrating the lithium secondary battery according to embodiments of the present disclosure, respectively. Specifically, FIG. 2 is a cross-sectional view taken on line I-I' in FIG. 1.

Referring to FIGS. 1 and 2, the lithium secondary battery may include an electrode assembly including a cathode 100 and an anode 130. The electrode assembly 150 may further include a separation membrane 140 interposed between the cathode 100 and the anode 130. The electrode assembly 150 may be housed in a case 160 together with an electrolyte solution including an electrolyte and may be impregnated with the electrolyte solution.

The anode 130 may include an anode current collector 125, and an anode active material layer 120 which is formed on at least one surface of the anode current collector 125 and includes the anode active material for a lithium secondary battery according to the above-described embodiments.

In some embodiments, a pore volume of the anode active material layer 120 may be 0.20 mL/g to 0.25 mL/g. For example, the pore volume of the anode active material layer 120 may refer to a passage through which lithium ions move based on a unit area, and may be measured through mercury porosimetry.

The mercury porosimetry may be a method in which the anode is vacuumed, then pressure is sequentially applied from a low pressure to a high pressure while the entire sample is surrounded by mercury, and a volume of mercury entering the pores within the sample is measured. For example, the void volume may be measured by applying pressure in a range of 0.2 psia to 33000 psia and forcing mercury into the pores within the sample.

For example, the pore volume of the anode active material layer 120 may be calculated by measuring a total pore volume of the anode active material layer 120 using a mercury porosimeter, and dividing the total pore volume by a total weight of the anode active material layer 120.

For example, the pore volume of the anode active material layer 120 may be 0.22 mL/g to 0.24 mL/g, 0.225 mL/g to 0.235 mL/g, or 0.230 mL/g to 0.235 mL/g.

Within the above range, lithium ion diffusion from the anode surface to an inside of the anode may be facilitated, and volume expansion of the anode active material may be accommodated. Accordingly, the resistance of the anode may be reduced, and the output characteristics and mechanical stability of the lithium secondary battery may be improved.

In some embodiments, it is possible to simultaneously satisfy the peak intensity ratio of the Raman spectrum of the above-described second anode active material and the pore volume range of the anode active material layer 120. Accordingly, crack formation in the anode active material may be suppressed, conductivity may increase, and the capacity and efficiency of the lithium secondary battery may be improved.

In some embodiments, an expansion rate of the anode 130, defined by Equation 2 below, may be 1% to 10.5%.

$$[\text{Equation 2}]$$

$$\text{Expansion rate } (\%) = (T_B - T_A) / (T_A) \times 100$$

In Equation 2, $T_A$ may be a thickness of the anode 130 when a state of charge of the lithium secondary battery including the anode 130 is 0%, and $T_B$ may be a thickness of the anode 130 when the state of charge of the lithium secondary battery including the anode 130 is 100%.

For example, the expansion rate of the anode 130 may be 2% to 10%, 3% to 9.5%, 4% to 9%, or 10% or less. Within the above-described expansion rate range of the anode 130, the mechanical stability and lifespan characteristics of the lithium secondary battery may be improved.

For example, the anode current collector 125 may include a highly conductive metal which has improved adhesion with the anode slurry and is non-reactive within the voltage range of the secondary battery. The anode current collector 125 may have a thickness of 10 $\mu$m to 50 $\mu$m, for example, but it is not limited thereto.

For example, the anode current collector 125 may include gold, copper, stainless steel, nickel, aluminum, titanium or an alloy thereof. The anode current collector 125 may include copper or stainless steel subjected to surface treatment with carbon, nickel, titanium, or silver.

For example, the anode active material layer 120 includes the anode active material and the anode binder for the lithium secondary battery according to the above-described embodiments, and may further include a conductive material.

For example, the anode 130 may be prepared by mixing and stirring the first anode active material, the second anode active material, the anode binder, and the conductive material in a solvent to prepare an anode slurry, and then applying the anode slurry to the anode current collector 125, followed by drying and pressing the same.

The coating process may be performed by methods such as gravure coating, slot die coating, simultaneous multilayer die coating, imprinting, doctor blade coating, dip coating, bar coating, casting, etc., but it is not limited thereto.

Non-limiting examples of the solvent for the anode slurry may include water, pure water, deionized water, distilled water, ethanol, isopropanol, methanol, acetone, n-propanol, t-butanol and the like.

In some embodiments, a styrene-butadiene rubber (SBR)-based binder, carboxymethyl cellulose (CMC), polyacrylic acid-based binder, poly(3,4-ethylenedioxythiophene)-based binder also known as PEDOT-based binder, and the like may be used as the anode binder.

The conductive material may be added to the anode active material layer in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$ (Lanthanum Strontium Cobalt Oxide) and $LaSrMnO_3$ (Lanthanum Strontium Manganese Oxide).

For example, the anode active material layer 120 may further include a thickener and/or a dispersant. For example, carboxymethyl cellulose (CMC) may be used as the thickener, however the embodiments are not to be limited in this way.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel subjected to surface treatment with carbon, nickel, titanium, or silver. The cathode current collector may have a thickness of 10 $\mu$m to 50 $\mu$m, for example, but it is not limited thereto.

For example, the cathode active material layer 110 may include a cathode active material, and the cathode active material may include a compound capable of reversibly intercalating and deintercalating lithium ions.

According to embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

$$[\text{Formula 1}] \qquad Li_xNi_aM_bO_{2+z}$$

In Formula 1, x, a, b and z may satisfy $0.9 \leq x \leq 1.2$, $0.6 \leq a \leq 0.99$, $0.01 < b \leq 0.4$, $-0.5 \leq z \leq 0.1$. As described above, M may include Co, Mn, and/or Al.

The chemical structure represented by Formula 1 indicates a bonding relationship between elements included in the layered structure or crystal structure of the cathode active material, and does not exclude other additional elements. For example, M includes Co and/or Mn, and Co and Mn may be provided as main active elements of the cathode active material together with Ni. Here, it should be understood that Formula 1 is provided to express the bonding relationship between the main active elements, and is a formula encompassing introduction and substitution of the additional elements.

In some embodiments, the cathode active material may further include one or more auxiliary elements which are added to the main active elements, to enhance chemical stability thereof or the layered structure/crystal structure. The auxiliary element may be incorporated into the layered structure/crystal structure together to form a bond, and it should be understood that this case is also included within the chemical structure represented by Formula 1.

The auxiliary element may include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr, for example. The auxiliary element may act as an auxiliary active element which contributes to the capacity/output activity of the cathode active material together with the Co or Mn like Al.

For example, the cathode active material or the lithium-nickel metal oxide may include a layered structure or a crystal structure represented by Formula 1-1 below.

$$[\text{Formula 1-1}] \qquad Li_xNi_aM1_{b1}M2_{b2}O_{2+z}$$

In Formula 1-1, M1 may include Co, Mn, and/or Al. M2 may include the above-described auxiliary elements. In Formula 1-1, x, a, b and z may satisfy $0.9 \leq x \leq 1.2$, $0.6 \leq a \leq 0.99$, $0.01 \leq b1+b2 \leq 0.4$, $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be included in the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and lifespan stability of the cathode or the secondary battery may be relatively decreased, and a side reaction with the electrolyte may also be increased. However, according to embodiments, the lifespan stability and capacity retention characteristics may be improved through Mn while maintaining electrical conductivity by including Co.

The content ofNi (e.g., a mole fraction of nickel based on the total number of moles of nickel, cobalt and manganese) in the NCM-based lithium oxide may be 0.6 or more, 0.7 or more, or 0.8 or more. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include a manganese (Mn)-rich active material, a lithium rich layered oxide (LLO)/over lithiated oxide (OLO)-based active material, or a cobalt (Co)-less active material, which have a chemical structure or crystal structure represented by Formula 2 below.

$$[\text{Formula 2}] \qquad p[Li_2MnO_3] \cdot (1-p)[Li_qJO_2]$$

In Formula 2, p and q may satisfy $0 < p < 1$, $0.9 \leq q \leq 1.2$, and J may include at least one element among Mn, Ni, Co, Fe, Cr, V, Cu, Zn, Ti, Al, Mg and B.

For example, the cathode active material may be dispersed in a solvent to prepare a cathode slurry. The cathode current collector 105 may be coated with the cathode slurry, and then dried and pressed to prepare the cathode 100. The coating process may be performed by a method such as gravure coating, slot die coating, simultaneous multilayer die coating, imprinting, doctor blade coating, dip coating, bar coating or casting, etc., but it is not limited thereto. The cathode slurry may further include a binder, and optionally further include a conductive material, a thickener, but is not limited thereto.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran, but is not limited thereto.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR), but is not limited thereto. In some embodiments a PVDF-based binder may be used as the cathode binder.

The cathode active material layer 110 may include the conductive material and thickener as above-described materials in the anode active material layer 120.

In some embodiments, a separation membrane 140 may be interposed between the cathode 100 and the anode 130. The separation membrane may prevent electrical short-circuit between the cathode and the anode, and maintain a flow of ions. According to an embodiment, the separation membrane may have a thickness of 10 $\mu$m to 20 $\mu$m, but it is not limited thereto.

The separation membrane may include a porous polymer film or a porous nonwoven fabric. The porous polymer film may include a polyolefin polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, but is not limited thereto.

The separation membrane may also include a ceramic-based material. For example, inorganic particles may be applied to the polymer film or dispersed within the polymer film to improve heat resistance.

The separation membrane may have a single-layer or multi-layer structure including the above-described polymer film and/or non-woven fabric.

According to some embodiments, the cathode 100, the anode 130 and the separation membrane 140 may be repeatedly disposed to form an electrode assembly 150. In some embodiments, the electrode assembly 150 may have a jelly roll shape formed by winding, stacking, z-folding, or stack-folding the separation membrane 140.

In some embodiments the electrode assembly 150 may have a jelly roll shape formed by winding the cathode 100, the anode 130 and the separation membrane 140 together. In some embodiments the electrode assembly 150 may have a jelly roll shape in which the notched cathodes and anodes are disposed in a space formed by repeatedly z-folding the separation membrane 140.

In some embodiments the electrode assembly may be formed by repeatedly stacking the cathodes, anodes, and separation membranes with the respective layers being cut or separated from each other.

For example, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead and an anode lead) extending or exposed to an outside of the case 160.

For example, a pouch-shaped case, a square case, a cylindrical-shaped case, or a coin-shaped case, etc. may be used to house the battery.

The electrode assembly 150 may be housed in the case 160 together with the electrolyte to define a lithium secondary battery. According to embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be utilized.

The organic solvent may include an organic compound which has sufficient solubility for the lithium salt and the additive, and does not have reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, but is not limited thereto. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound, but is not limited thereto.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

Hereinafter, embodiments of the present disclosure will be further described with reference to specific experimental examples. However, the following examples and comparative examples included in the experimental examples are only given for illustrating the embodiments of the present disclosure and those skilled in the art will understand that various alterations and modifications are possible within the scope and technical concepts of the present disclosure. Such alterations and modifications are duly included in the appended claims. Furthermore, the embodiments may be combined to form additional embodiments.

## Example 1

(1) Preparation of silicon-based active material

Silicon oxide ($SiO_x$, 0<x<2) particles having a median particle diameter (D50) of 5 $\mu$m were obtained by a pulverization process using a jet mill, and the silicon oxide particles were subjected to heat treatment at 950°C for 1 hour in the presence of an inert gas ($N_2$) to prepare a silicon-based active material, which is used as a second anode active material.

(2) Preparation of anode

92.3 wt% of artificial graphite (median particle diameter (D50): 13 $\mu$m) as a first anode active material, 5.0 wt% of silicon oxide ($SiO_x$, 0<x<2) particles (median particle diameter (D50): 5 $\mu$m) prepared in (1) as the second anode active material, 1.1 wt% of CMC binder, 1.5 wt% of SBR binder, 0.1 wt% of SWCNT (Single-Walled Carbon Nanotubes) conductive material, and water were added to prepare an anode active material composition in the form of a slurry.

The prepared anode active material composition was applied to both surfaces of a copper current collector (copper foil having a thickness of 8 $\mu$m), followed by drying and pressing the same to prepare an anode.

(3) Manufacturing of lithium secondary battery

A slurry was prepared by mixing $Li[Ni_{0.88}Co_{0.1}Mn_{0.02}]O_2$ as the cathode active material, carbon black as a conductive material, and polyvinylidene fluoride (PVDF) as a binder in a weight ratio of 98.08:0.72:1.2. The slurry was uniformly applied to an aluminum foil having a thickness of 12 $\mu$m, followed by vacuum drying the same to prepare a cathode.

The cathode and the anode were respectively notched in a predetermined size and stacked, then an electrode cell was fabricated by interposing a separator (polyethylene, thickness: 13 $\mu$m) between the cathode and the anode. Thereafter, tap parts of the cathode and the anode were welded, respectively. A combination of the welded cathode/-separator/anode was put into a pouch, followed by sealing three sides of the pouch except for one side into which an electrolyte is injected. At this time, a portion having the electrode tab was included in the sealing part.

An electrolyte was injected through the remaining side except for the sealing parts, and the remaining side was sealed, followed by impregnation for 12 hours or more, to manufacture a lithium secondary battery.

As the electrolyte, a solution prepared by dissolving 1.2 M $LiPF_6$ in a mixed solvent of ethylene carbonate (EC), ethyl methyl carbonate (EMC), and diethyl carbonate (DEC) (EC/EMC/DEC 20/70/10; volume ratio), and then an addition 2 wt% of fluoroethylene carbonate (FEC), 0.3 wt% of 1,3-propene sultone (PRS), 0.5 wt% of 1,3-propane sultone (PS), and 0.5 wt% of ESA(1,2-ethylene sulfate) was used.

Thereafter, heat press pre-charging was performed on the lithium secondary battery for 60 minutes at a current corresponding to an average 0.5C. After stabilization for 12 hours or more, degassing was performed, and after aging for 24 hours or more, formation charging/discharging was performed (charging condition: CC-CV 0.25C 4.2V 0.05C CUT-OFF, discharging condition: CC 0.25C 2.5V CUTOFF).

Thereafter, standard charging/discharging was performed (charging condition: CC-CV 0.33C 4.2V 0.05C cut-off, discharging condition: CC 0.33C 2.5V cut-off).

## Example 2

An anode and a lithium secondary battery were manufactured according to the same procedures as described in Example 1, except that silicon oxide ($SiO_x$, $0<x<2$) particles, which were pulverized to have a median particle diameter $D_{50}$ of 5 $\mu$m using a jet mill but were not subjected to heat treatment, were used as the second anode active material.

## Example 3

An anode and a lithium secondary battery were manufactured according to the same procedures as described in Example 1, except that silicon oxide ($SiO_x$, $0<x<2$) particles, which were pulverized to have a minimum particle diameter ($D_{min}$) of 1 $\mu$m using a jet mill but were not subjected to heat treatment, were used as the second anode active material.

## Example 4

An anode and a lithium secondary battery were manufactured according to the same procedures as described in Example 1, except that silicon oxide ($SiO_x$, $0<x<2$) particles having a carbon content of 0.5 wt% as an impurity were used as the second anode active material.

## Example 5

An anode and a lithium secondary battery were manufactured according to the same procedures as described in Example 1, except that silicon oxide ($SiO_x$, $0<x<2$) particles having a carbon content of 0.1 wt% as an impurity were used as the second anode active material.

## Comparative Example 1

### (1) Preparation of carbon-coated silicon oxide particles

Silicon oxide ($SiO_x$, $0<x<2$) particles were placed in a chemical-vapor-deposition (CVD) coater, and a mixed gas of acetylene and nitrogen was injected at a flow rate of 50 mL/min. At this time, the CVD coater was heated to 900°C at a heating rate of 5°C/min and maintained at 900°C for 1 hour to prepare silicon oxide particles including a carbon coating on their surface.
The carbon content of the silicon oxide particles including the carbon coating was adjusted to 3.2 wt%.
(2) An anode and a lithium secondary battery were manufactured according to the same procedures as described in Example 1, except that the carbon-coated silicon oxide particles prepared in (1) were used in the same amount instead of the silicon oxide ($SiO_x$, $0<x<2$) particles as the second anode active material.

## Comparative Example 2

An anode and a lithium secondary battery were manufactured according to the same procedures as described in Comparative Example 1, except that silicon oxide particles including a carbon coating (carbon content 3.9 wt%) was prepared by using a mixed gas of methane and nitrogen instead of the mixed gas of acetylene and nitrogen and changing the heat treatment temperature to 1000°C instead of 900°C and was used as the second anode active material.

## Comparative Example 3

An anode and a lithium secondary battery were manufactured according to the same procedures as described in Comparative Example 1, except that silicon oxide particles (carbon content 1.9 wt%) including a carbon coating prepared by changing the injection rate of the mixed gas of acetylene and nitrogen to a flow rate of 30 mL/min were used as the second anode active material.

## Comparative Example 4

An anode and a lithium secondary battery were manufactured according to the same procedures as described in Comparative Example 1, except that silicon oxide particles (carbon content of 2.1 wt%) including a carbon coating prepared using silicon oxide ($SiO_x$, $0<x<2$) particles having a minimum particle diameter ($D_{min}$) of 1 $\mu$m were used as the second anode active material.

## Comparative Example 5

An anode and a lithium secondary battery were manufactured according to the same procedures as described in Example 1, except that the second anode active material was prepared by including crystalline silicon oxide ($SiO_x$, $0<x<2$) particles in an amount of 30 wt% in the silicon-based active material.

## Experimental Example

### (1) Thermogravimetric analysis

Thermogravimetric analysis was performed on the second anode active materials of the examples and comparative examples to measure the carbon content in the second anode active material.

30 mg of the dried second anode active material was placed in a thermalgravimetric analyzer (TGA, TA Instrument) and heated from 25°C to 900°C at a heating rate of 5°C/min under an air atmosphere to conduct thermal decomposition, and the carbon content in the second anode active material was calculated according to Equation 3 below. The results are shown in Table 1 below.

Carbon content (wt%) in second anode active material = (Weight (g) of second anode active material at 25°C - Weight of second anode active material at 600°C (g))/(Weight (g) of second anode active       [Equation 3] material at 25°C) $\times$ 100

### (2) Evaluation of peak intensity ratio of Raman spectrum

The Raman spectra of the second anode active materials of the examples and comparative examples were measured using a 532 nm laser Raman analyzer.

In the acquired Raman spectra, the peak intensity at a Raman shift of 520 cm$^{-1}$ (e.g., I(520)) and the peak intensity at a Raman shift of 470 cm$^{-1}$ (e.g., I(470)) were measured. Then, the measured peak intensities were applied to Equation 1 to calculate a peak intensity ratio of the Raman spectrum, and the results are shown in Table 1 below.

$$[\text{Equation 1}]$$

$$\text{Peak intensity ratio of Raman spectrum} = I(520) / I(470)$$

The specific measurement conditions of Raman spectrum were as follows.

i) Equipment: Renishaw inVia Raman spectroscopy
ii) Wavelength: 532 nm
iii) Grating: 1800 L/mm
iv) Detector: CCD
v) Objective: x20

### (3) Evaluation of pore volume of the anode active material layer

The pore volumes of the anode active material layers included in the anodes of the examples and comparative examples were measured using mercury intrusion porosimetry.

The pore volume (mL) of the entire anode active material layer was measured using a mercury porosimeter at SOC 0%, and then the pore volume (mL/g) of the anode active material layer was calculated by dividing the total pore volume by the total weight (g) of the anode active material layer. The values obtained as the pore volume are shown in Table 1 below.

### (4) Evaluation of anode expansion rate

After performing formation charging and discharging on the lithium secondary batteries of the examples and comparative examples, the batteries at a state of State of Charge (SOC) 0% and SOC 100% were disassembled, respectively, and the thickness of the anode was measured to calculate the expansion rate of the anode using Equation 2 below. The results are shown in Table 1 below.

[Equation 2]

$$\text{Expansion rate (\%)} = (T_B - T_A) / (T_A) \times 100$$

wherein in Equation 2, $T_A$ is a thickness of the anode when a state of charge of the lithium secondary battery including the anode is 0%, and $T_B$ is a thickness of the anode when the state of charge of the lithium secondary battery including the anode is 100%.

**(5) Evaluation of electrode resistance**

The electrode resistance ($\Omega$*cm) of the anodes of the examples and comparative examples was measured under 10 mA conditions using a current collector at a state of SOC 0%, and the results are shown in Table 1 below.

**(6) Evaluation of formation capacity and formation efficiency**

Charging (CC/CV, 0.5 C, 4.2 V, 0.05 C cut-off) and discharging (CC, 0.5 C, 2.7 V cut-off) at 25°C were performed on the lithium secondary batteries of the examples and comparative examples, and the charge capacity and discharge capacity were measured.
The discharge capacity was taken as the formation capacity, and the formation efficiency was calculated as the percentage (%) of the discharge capacity relative to the charge capacity. The results are shown in Table 1 below.

**(7) Measurement of DC-IR and power**

The charge output and discharge output characteristics of the lithium secondary batteries of the examples and comparative examples were measured using the hybrid pulse power characterization (HPPC) measurement method. 1C-rate discharge and 0.75C-rate charge conditions were applied, and the DC-IR (mQ*s) and power (W/kg) at the time of discharge at SOC 50% were measured. The results are shown in Table 1 below.

[TABLE 1]

|  | Carbon content in second anode active material | Peak intensity ratio | Anode pore volume (mL/g) | Electrode expansion rate (%) | Electrode resistance ($\Omega$*cm) |
|---|---|---|---|---|---|
| Example 1 | 0 wt% | 1.68 | 0.225 | 9.9 | 0.0651 |
| Example 2 | 0 wt% | 0.68 | 0.231 | 8.7 | 0.0620 |
| Example 3 | 0 wt% | 0.63 | 0.227 | 9.3 | 0.0584 |
| Example 4 | 0.5 wt% | 1.19 | 0.235 | 10.0 | 0.0593 |
| Example 5 | 0.1 wt% | 1.43 | 0.224 | 9.8 | 0.0607 |
| Comparative Example 1 | 3.2 wt% | 2.44 | 0.230 | 10.9 | 0.0768 |
| Comparative Example 2 | 3.9 wt% | 2.9 | 0.211 | 14.0 | 0.0811 |
| Comparative Example 3 | 1.9 wt% | 1.36 | 0.252 | 11.8 | 0.0910 |
| Comparative Example 4 | 2.1 wt% | 2.73 | 0.243 | 14.6 | 0.0861 |
| Comparative Example 5 | 0 wt% | 3.21 | 0.206 | 15.1 | 0.0824 |

[TABLE 2]

|  | Formation capacity (Ah) | Formation efficiency (%) | DC-IR_Discharge (m$\Omega$*s) | Power_Discharge (W/kg) |
|---|---|---|---|---|
| Example 1 | 23.3 | 87.1 | 2.90 | 3364 |
| Example 2 | 23.6 | 88.4 | 2.94 | 3409 |

(continued)

|  | Formation capacity (Ah) | Formation efficiency (%) | DC-IR_Discharge (mΩ*s) | Power_Discharge (W/kg) |
|---|---|---|---|---|
| Example 3 | 23.2 | 86.1 | 2.98 | 3385 |
| Example 4 | 23.4 | 87.6 | 2.98 | 3364 |
| Example 5 | 23.5 | 87.3 | 2.96 | 3395 |
| Comparative Example 1 | 23.4 | 87.8 | 3.02 | 3293 |
| Comparative Example 2 | 23.3 | 88.1 | 3.12 | 3215 |
| Comparative Example 3 | 23.3 | 87.9 | 3.09 | 3213 |
| Comparative Example 4 | 23.1 | 86.7 | 3.06 | 3258 |
| Comparative Example 5 | 23.0 | 86.5 | 3.01 | 3139 |

Referring to Tables 1 and 2, the anodes of Examples 1 to 5 exhibited low resistance and expansion rate, and the batteries of Examples 1 to 5 had improved capacity characteristics and output characteristics.

The anodes of Comparative Examples 1 to 4, which included a second anode active material containing silicon oxide particles having a carbon content greater than 1 wt%, exhibited high resistance and expansion rate, and the batteries of Comparative Examples 1 to 4 had high resistance and low output.

The anode of Comparative Example 5, which included a second anode active material with a high ratio of silicon having a crystalline structure due to the mixed crystalline silicon oxide particles, exhibited high resistance and expansion rate, and the batteries of Comparative Example 5 exhibited low capacity, efficiency and output.

**Claims**

1. An anode active material for a lithium secondary battery comprising:

   a first anode active material which comprises a carbon-based active material; and
   a second anode active material which comprises a silicon-based active material with a carbon content of 1% by weight or less,
   wherein a content of the second anode active material is 0.1% by weight to 9% by weight based on a total weight of the anode active material, and
   wherein a peak intensity ratio of a Raman spectrum of the second anode active material defined by Equation 1 below is 0.5 to 2.3:

   [Equation 1]

   $$\text{Peak intensity ratio of Raman spectrum} = I(520) / I(470)$$

   in Equation 1, $I(520)$ is a peak intensity of the second anode active material at a Raman shift of 520 cm$^{-1}$ in the Raman spectrum, and $I(470)$ is a peak intensity of the second anode active material at a Raman shift of 470 cm$^{-1}$ in the Raman spectrum.

2. The anode active material for a lithium secondary battery according to claim 1, wherein the silicon-based active material comprises silicon oxide ($SiO_x$, $0<x<2$) particles.

3. The anode active material for a lithium secondary battery according to claim 2, wherein the silicon oxide particles have no carbon coating on their surface.

4. The anode active material for a lithium secondary battery according to claim 1 or 2, wherein the silicon-based active material has a carbon content of 0.5% by weight or less.

5. The anode active material for a lithium secondary battery according to any one of claims 1 to 4, wherein the silicon-based active material has a carbon content of 0% by weight.

6. The anode active material for a lithium secondary battery according to any one of claims 1 to 5, wherein the peak intensity ratio of the Raman spectrum of the second anode active material is 0.6 to 2.

7. The anode active material for a lithium secondary battery according to any one of claims 1 to 6, wherein the content of the second anode active material is 0.5% by weight to 8% by weight based on the total weight of the anode active material.

8. The anode active material for a lithium secondary battery according to any one of claims 1 to 7, wherein the content of the first anode active material is 90% by weight to 98% by weight based on the total weight of the anode active material.

9. The anode active material for a lithium secondary battery according to any one of claims 1 to 8, wherein the carbon-based active material includes at least one selected from the group consisting of artificial graphite and natural graphite.

10. An anode for a lithium secondary battery comprising:

   an anode current collector; and
   an anode active material layer which is formed on at least one surface of the anode current collector and comprises the anode active material for a lithium secondary battery according to any one of claims 1 to 9.

11. The anode for a lithium secondary battery according to claim 10, wherein a pore volume of the anode active material layer is 0.20 mL/g to 0.25 mL/g.

12. The anode for a lithium secondary battery according to claim 10, wherein a pore volume of the anode active material layer is 0.22 mL/g to 0.24 mL/g.

13. The anode for a lithium secondary battery according to any one of claims 10 to 12, wherein an expansion rate defined by Equation 2 below is 1% to 10.5%:

$$[\text{Equation 2}]$$

$$\text{Expansion rate } (\%) = (T_B - T_A) / (T_A) \times 100$$

wherein in Equation 2, $T_A$ is a thickness of the anode when a state of charge of the lithium secondary battery including the anode is 0%, and $T_B$ is a thickness of the anode when the state of charge of the lithium secondary battery including the anode is 100%.

14. The anode for a lithium secondary battery according to claim 13, wherein the expansion rate is 2% to 10%.

15. A lithium secondary battery comprising:

   the anode for a lithium secondary battery according to any one of claims 10 to 13; and
   a cathode disposed to face the anode.

FIG. 1

FIG. 2

Europäisches Patentamt
European Patent Office
Office européen des brevets

# EUROPEAN SEARCH REPORT

**Application Number**

EP 25 17 7294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 207 336 A1 (SK ON CO LTD [KR]) 5 July 2023 (2023-07-05) * page 2, paragraph 0010 - page 19, paragraph 0206; claims 1-15; figures 1-4; tables 1-10 * | 1-15 | INV.<br>H01M4/13<br>H01M4/36<br>H01M4/48<br>H01M4/587<br>H01M10/0525 |
| X<br><br>A | ----- <br>US 2024/047651 A1 (JANG HWAN HO [KR] ET AL) 8 February 2024 (2024-02-08) * page 2, paragraph 0035 - page 7, paragraph 0154; claims 1-18; figures 1-6 * ----- | 1-10, 13-15<br>11,12 | ADD.<br>H01M4/139<br>H01M4/02 |

**TECHNICAL FIELDS SEARCHED (IPC)**

H01M

The present search report has been drawn up for all claims

| Place of search | Date of completion of the search | Examiner |
|---|---|---|
| Munich | 10 October 2025 | Polisski, Sergej |

EPO FORM 1503 03.82 (P04C01)

## EP 4 654 274 A1

## ANNEX TO THE EUROPEAN SEARCH REPORT
## ON EUROPEAN PATENT APPLICATION NO.

EP 25 17 7294

10-10-2025

| Patent document cited in search report | | Publication date | Patent family member(s) | | Publication date |
|---|---|---|---|---|---|
| EP 4207336 | A1 | 05-07-2023 | CN | 116387453 A | 04-07-2023 |
| | | | EP | 4207336 A1 | 05-07-2023 |
| | | | KR | 20230102223 A | 07-07-2023 |
| | | | KR | 20230104080 A | 07-07-2023 |
| | | | KR | 20250021520 A | 13-02-2025 |
| | | | US | 2023216033 A1 | 06-07-2023 |
| US 2024047651 | A1 | 08-02-2024 | CN | 116632161 A | 22-08-2023 |
| | | | CN | 118610372 A | 06-09-2024 |
| | | | EP | 4328994 A1 | 28-02-2024 |
| | | | KR | 102491619 B1 | 20-01-2023 |
| | | | KR | 20240015002 A | 02-02-2024 |
| | | | KR | 20250134159 A | 09-09-2025 |
| | | | US | 2024030409 A1 | 25-01-2024 |
| | | | US | 2024047651 A1 | 08-02-2024 |

For more details about this annex : see Official Journal of the European Patent Office, No. 12/82